# EUROPEAN PATENT APPLICATION

(11) **EP 4 692 841 A1**
(43) Date of publication of application: **11.02.2026**
(21) Application number: 24778820.1
(22) Date of filing: 16.02.2024
(51) Int. Cl.: G01S 7/481, G02B 6/12, G02F 1/01

(54) **RANGING DEVICE**

(30) Priority: 31.03.2023 JP 2023058936
(71) Applicant: Sony Semiconductor Solutions Corporation, Atsugi-shi, Kanagawa 243-0014 (JP)
(72) Inventor: YASU, Yohtaro, Atsugi-shi, Kanagawa 243-0014 (JP); EBIKO, Yoshiki, Atsugi-shi, Kanagawa 243-0014 (JP); MAEDA, Yuya, Atsugi-shi, Kanagawa 243-0014 (JP); TERADA, Haruhiko, Atsugi-shi, Kanagawa 243-0014 (JP)
(74) Representative: Müller Hoffmann & Partner
(86) International application number: PCT/JP2024/005566
(87) International publication number: WO 2024/202675

(57) **Abstract**

A semiconductor device according to an embodiment of the present embodiment includes a stack including a silicon photonics layer and a supporting substrate that are bonded to each other. The silicon photonics layer includes a waveguide through which an optical signal is transmitted and a metal film disposed to be opposed to the supporting substrate with the waveguide interposed therebetween. The metal film includes a heater layer configured to serve as a heater for the waveguide.

## Description

### Technical Field

The present disclosure relates to a ranging device.

### Background Art

In recent years, there has been developed a light detection and ranging (LiDAR) system using, instead of an optical fiber, a photonic integration circuit (PIC) in which an optical component, such as a Si waveguide, is stacked on a silicon on insulator (SOI) substrate (see, for example, Patent Literature 1).

### Citation List

### Patent Literature

Patent Literature 1: Japanese Unexamined Patent Application Publication No. 2019-12136

### Summary of Invention

In such systems, a phase shifter that utilizes the thermo-optic effect in silicon photonics is used. For example, a phase shifter in which a waveguide and a heater layer are stacked on an SOI substrate is provided, and phase modulation is performed on an optical signal propagated through the waveguide by application of heat generated in the heater layer to the waveguide, which changes the refractive index of the waveguide due to the thermo-optic effect. Further improvement in the power efficiency of the phase shifter is expected of such systems. It is desirable to provide a semiconductor device and a ranging device that make it possible to improve the power efficiency of a phase shifter.

A semiconductor device according to an embodiment of the present disclosure includes a stack including a silicon photonics layer and a supporting substrate that are bonded to each other. The silicon photonics layer includes a waveguide through which an optical signal is transmitted, and a metal film disposed to be opposed to the supporting substrate with the waveguide interposed therebetween. The metal film includes a heater layer configured to serve as a heater for the waveguide.

A ranging device according to an embodiment of the present disclosure includes: a light source chip that outputs an optical signal; and a silicon photonics layer including a waveguide through which the optical signal output from the light source chip is transmitted, and a detector configured to detect a signal guided through the waveguide. Furthermore, this ranging device further includes: a supporting substrate bonded to the silicon photonics layer; and a signal processing substrate that processes the signal detected by the detector. The silicon photonics layer includes: the waveguide through which the optical signal is transmitted; and a metal film disposed to be opposed to the supporting substrate with the waveguide interposed therebetween. The metal film includes a heater layer configured to serve as a heater for the waveguide.

In the semiconductor device and the ranging device according to the embodiments of the present disclosure, the silicon photonics layer and the supporting substrate are bonded to each other, and the heater layer configured to serve as a heater for the waveguide is disposed to be opposed to the supporting substrate with the waveguide interposed therebetween. Thus, as compared with a phase shifter in which a waveguide and a heater layer are stacked on an SOI substrate, the heater layer is disposed in a position away from the supporting substrate. Furthermore, the waveguide is present in a heat propagation path from the heater layer to the supporting substrate. Consequently, it is possible to efficiently propagate heat generated in the heater layer to the waveguide, and therefore, it is possible to improve the power efficiency of a phase shifter.

### Brief Description of Drawings

[FIG. 1] FIG. 1 is a diagram illustrating a schematic configuration example of a ranging device according to an embodiment of the present disclosure.
[FIG. 2] FIG. 2 is a diagram illustrating an example of a cross-sectional configuration of a PIC substrate illustrated in FIG. 1.
[FIG. 3] FIG. 3 is a diagram illustrating an example of a cross-sectional configuration of the PIC substrate illustrated in FIG. 1.
[FIG. 4] FIG. 4 is a diagram illustrating a schematic configuration example of an antenna illustrated in FIG. 1.
[FIG. 5] FIG. 5 is a diagram illustrating a schematic configuration example of a coupler and a detector illustrated in FIG. 1.
[FIG. 6] FIG. 6 is a perspective view illustrating a configuration example of the detector illustrated in FIG. 5.
[FIG. 7A] FIG. 7A is a cross-sectional view for explaining a method for manufacturing the PIC substrate illustrated in FIG. 1.
[FIG. 7B] FIG. 7B is a cross-sectional view for explaining the manufacturing method continued from FIG. 7A.
[FIG. 7C] FIG. 7C is a cross-sectional view for explaining the manufacturing method continued from FIG. 7B.
[FIG. 7D] FIG. 7D is a cross-sectional view for explaining the manufacturing method continued from FIG. 7C.
[FIG. 8] FIG. 8 is a diagram illustrating a modification example of the cross-sectional configuration of the PIC substrate illustrated in FIG. 6.
[FIG. 9] FIG. 9 is a diagram illustrating a modification example of the cross-sectional configuration of the PIC substrate illustrated in FIG. 6.
[FIG. 10] FIG. 10 is a diagram illustrating a modification example of a planar configuration of a trench section illustrated in FIG. 9.
[FIG. 11] FIG. 11 is a diagram illustrating a modification example of the cross-sectional configuration of the PIC substrate illustrated in FIG. 6.
[FIG. 12] FIG. 12 is a diagram illustrating a modification example of the cross-sectional configuration of the PIC substrate illustrated in FIG. 6.
[FIG. 13] FIG. 13 is a diagram illustrating a modification example of the cross-sectional configuration of the PIC substrate illustrated in FIG. 5.
[FIG. 14] FIG. 14 is a diagram illustrating a modification example of the cross-sectional configuration of the PIC substrate illustrated in FIG. 6.
[FIG. 15] FIG. 15 is a diagram illustrating a modification example of the cross-sectional configuration of the PIC substrate illustrated in FIG. 6.
[FIG. 16] FIG. 16 is a diagram illustrating a modification example of the cross-sectional configuration of the PIC substrate illustrated in FIG. 6.
[FIG. 17] FIG. 17 is a block diagram depicting an example of schematic configuration of a vehicle control system.
[FIG. 18] FIG. 18 is a diagram of assistance in explaining an example of installation positions of an outside-vehicle information detecting section and an imaging section.

### Modes for Carrying Out the Invention

With reference to the drawings, modes for carrying out the present disclosure are described in detail below. It is to be noted that the description is given in the following order.

### 1. Embodiment

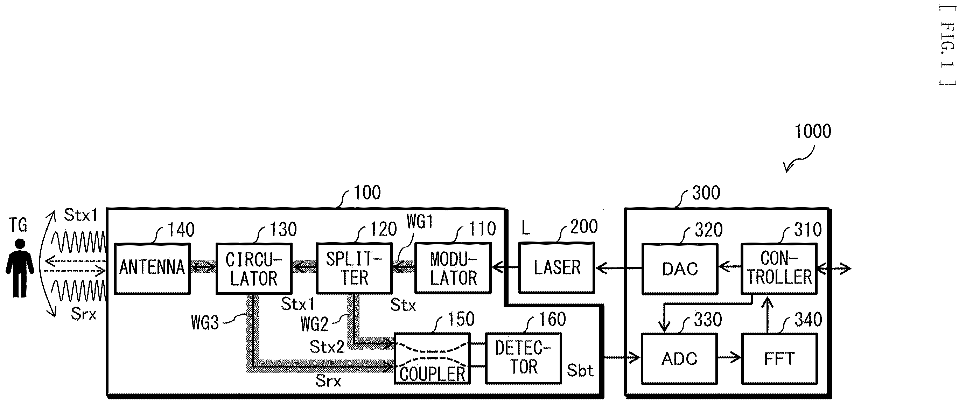

An example where a supporting substrate is bonded to a PIC layer (FIGs. 1 to 7D)

### 2. Modification Examples

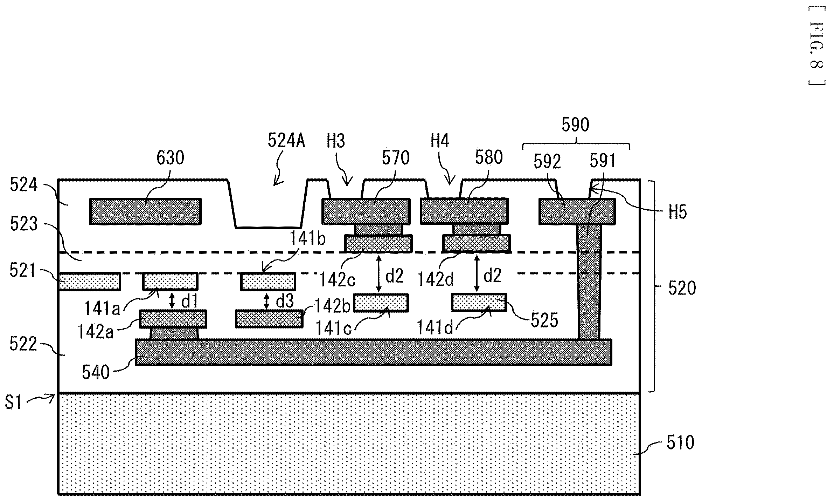

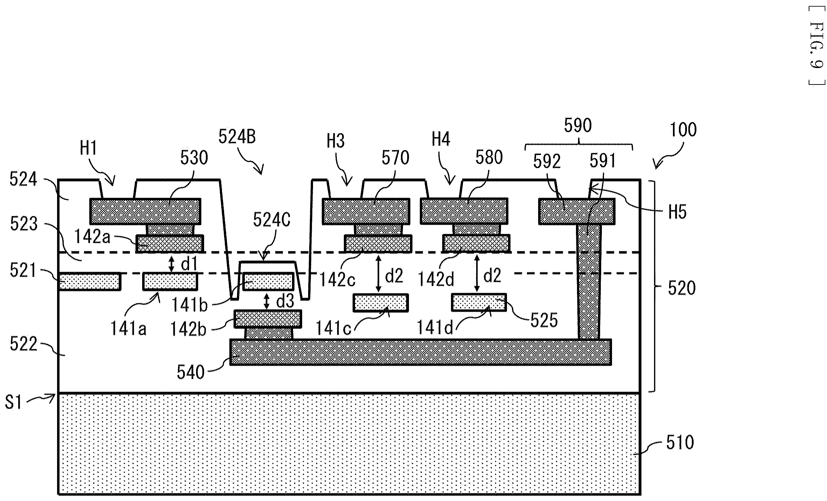

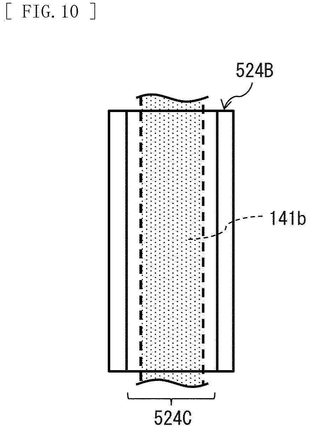

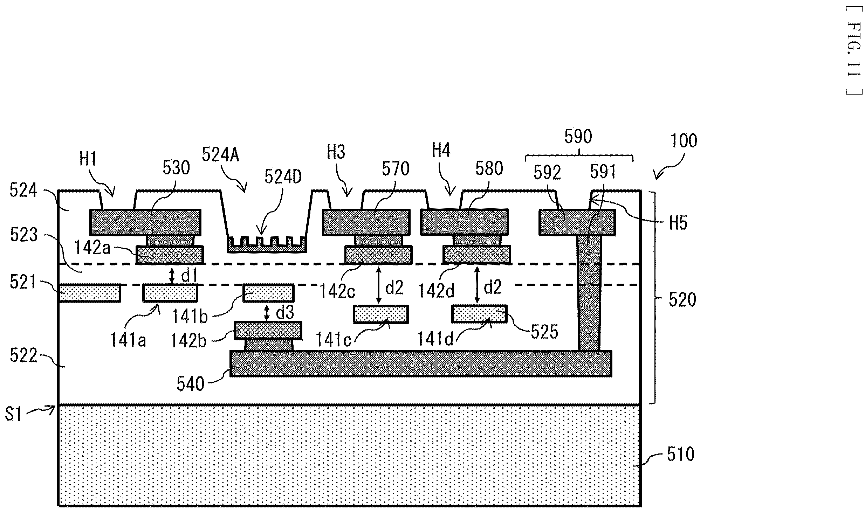

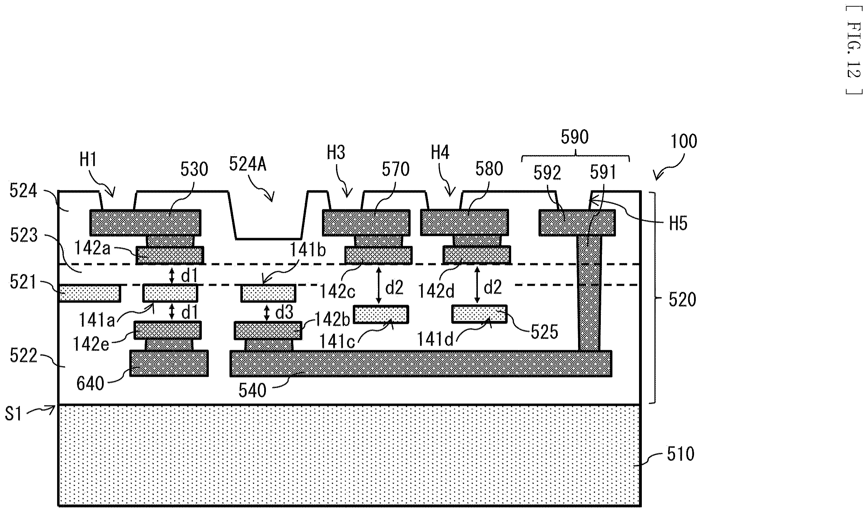

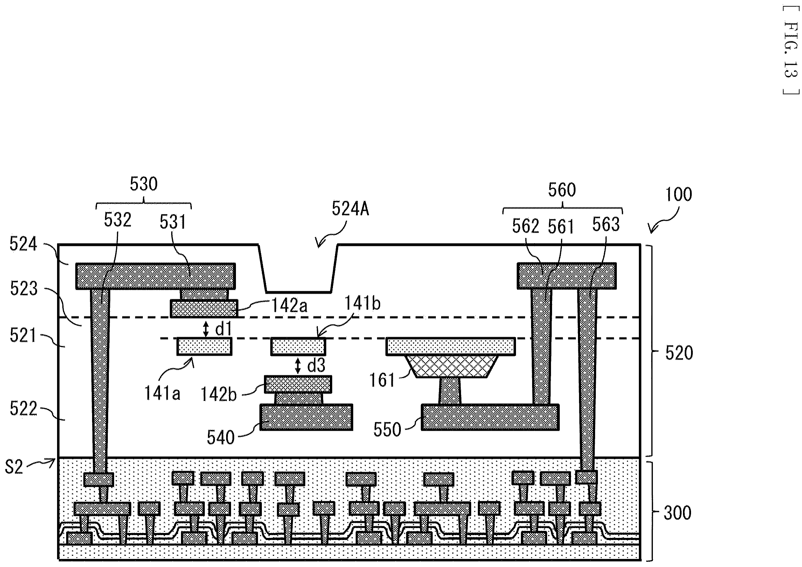

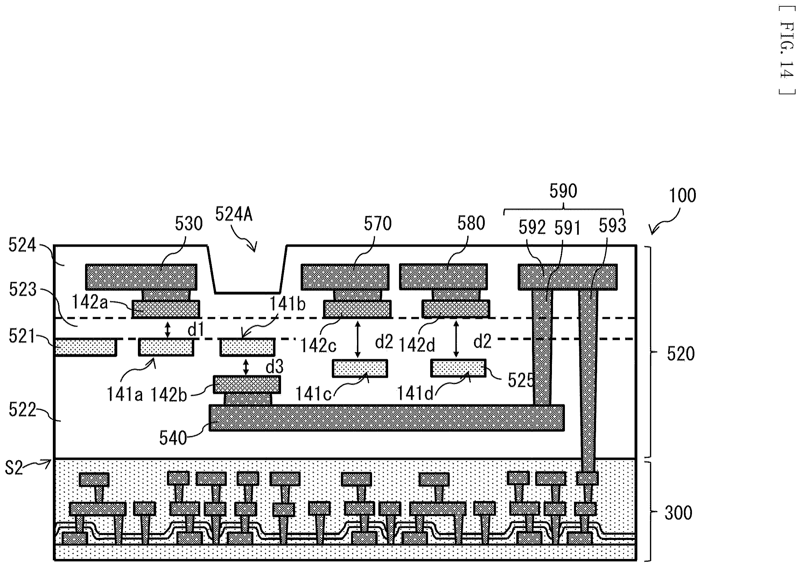

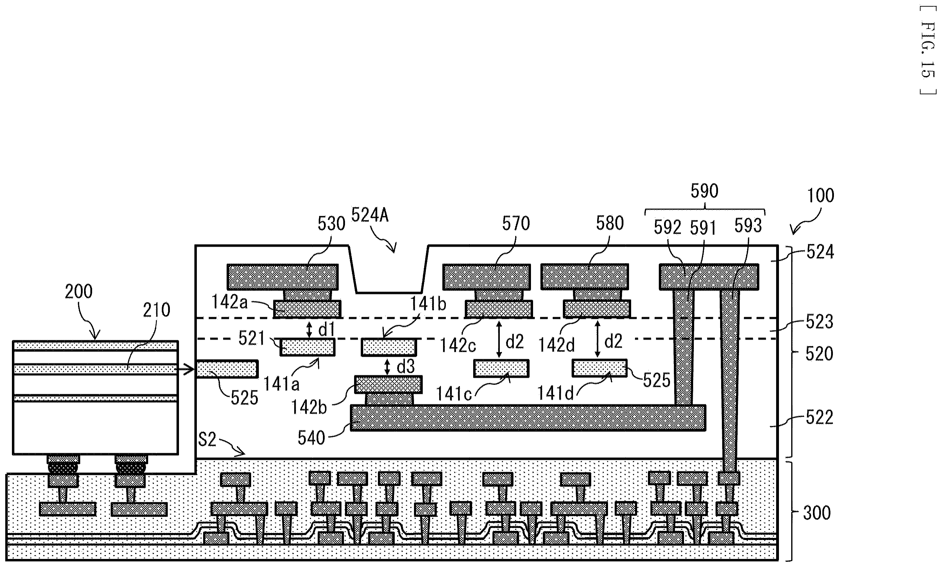

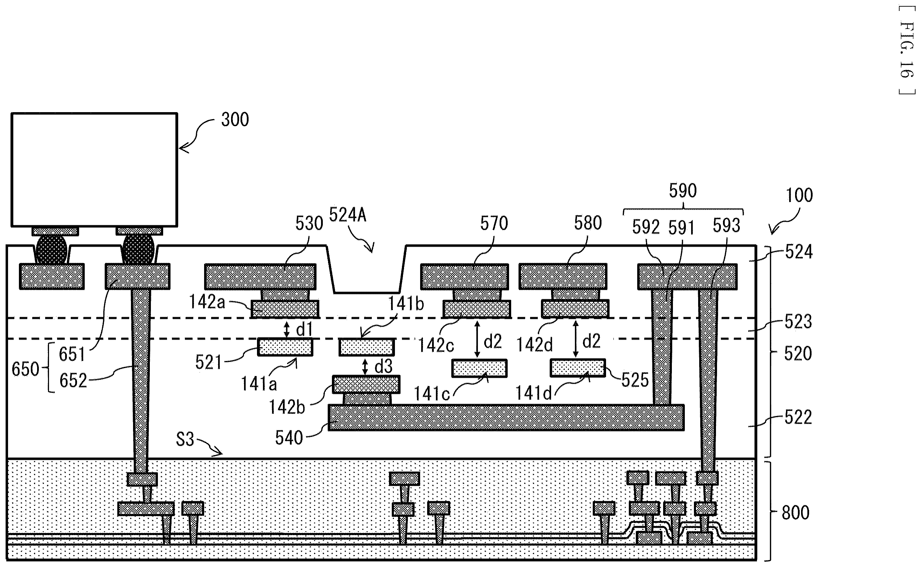

Modification Example 2-1: An example where a heatsink layer and a trench are provided (FIG. 8)
Modification Example 2-2: An example where a waveguide is surrounded by a trench section from three directions (FIGs. 9 and 10)
Modification Example 2-3: An example where a heatsink section is provided on a bottom surface of a recess (FIG. 11)
Modification Example 2-4: An example where a pair of heaters is provided to sandwich the waveguide between them (FIG. 12)
Modification Example 2-5: An example where a signal processing substrate is bonded to the PIC layer (FIGs. 13 and 14)
Modification Example 2-6: An example where a laser chip is mounted on the signal processing substrate (FIG. 15)
Modification Example 2-7: An example where the signal processing substrate is mounted on the PIC layer (FIG. 16)

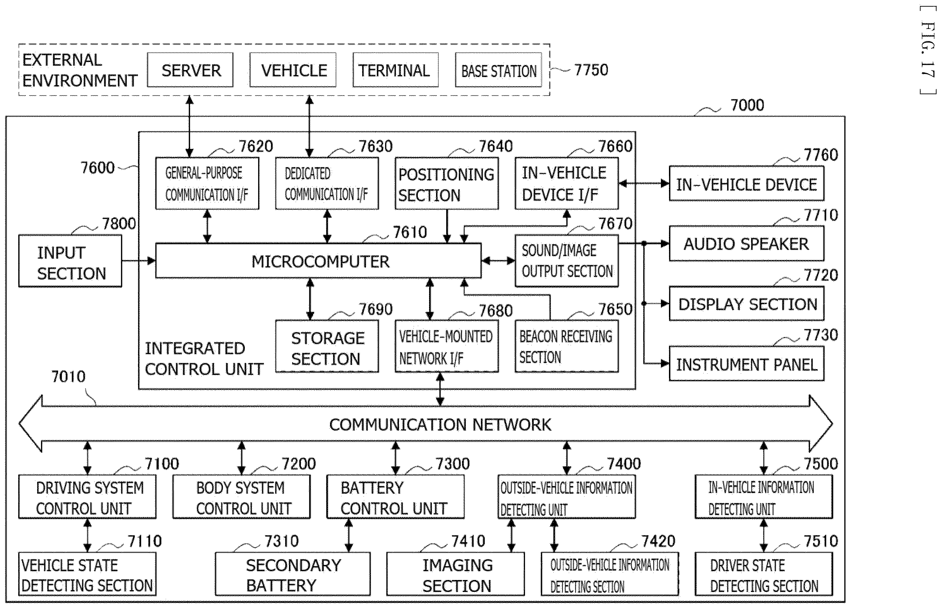

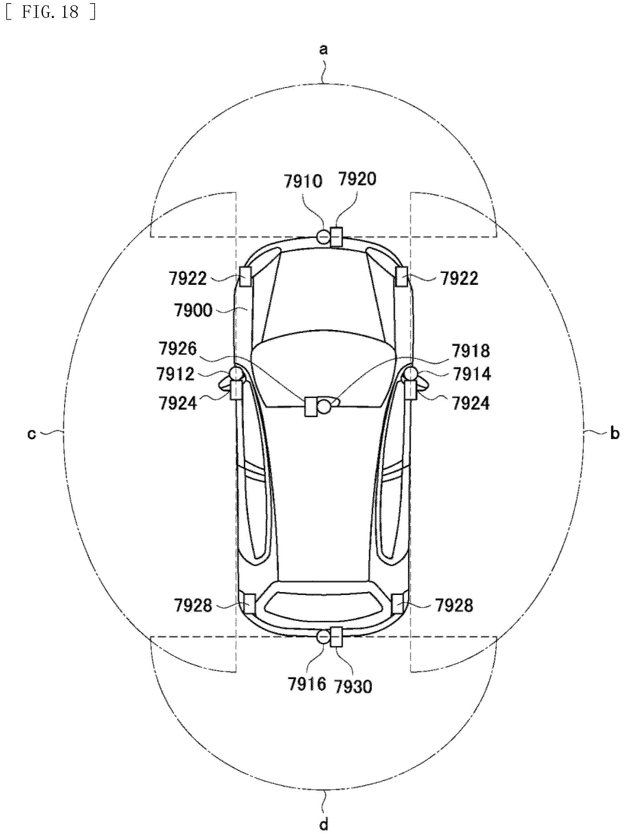

### 3. Application Examples (FIGs. 17 and 18)

### <1. Embodiment>

### <Configuration>

FIG. 1 illustrates a schematic configuration example of a ranging device 1000 according to an embodiment of the present disclosure. The ranging device 1000 is a frequency modulated continuous wave (FMCW) LiDAR. In the FMCW LiDAR, laser light (a transmission signal) that has been modulated to cause a frequency to increase linearly with time is continuously emitted, and a distance is found by a frequency difference between the transmission signal and reflected light (a return signal).

The ranging device 1000 includes, for example, as illustrated in FIG. 1, a PIC substrate 100, a laser chip 200, and a signal processing substrate 300.

### <Laser Chip 200>

The laser chip 200 is a light source chip that outputs an optical signal. The laser chip 200 is a compound semiconductor that serves as an edge-emitting light source, and is configured to emit laser light L (an optical signal) of a predetermined fixed wavelength (for example, 1550 nm) in accordance with the control by a controller 310 to be described later. The compound semiconductor that serves as a light source includes, for example, an active layer that amplifies light and a diffraction grating layer for laser oscillation. The compound semiconductor that serves as a light source is configured to emit laser light L towards the PIC substrate 100 (a Si layer 521 to be described later). Furthermore, the compound semiconductor that serves as a light source may be a semiconductor optical amplifier (SOA) having only a light amplifying function, and a resonator for laser oscillation may be formed on the side of the PIC substrate 100 optically coupled to the laser chip 200.

### <PIC Substrate 100>

The PIC substrate 100 includes, for example, as illustrated in FIG. 1, a modulator 110, a splitter 120, a circulator 130, an antenna 140, a coupler 150, and a detector 160. In the PIC substrate 100, the modulator 110, the splitter 120, the circulator 130, the antenna 140, the coupler 150, and the detector 160 are formed in a PIC layer 20 to be described later.

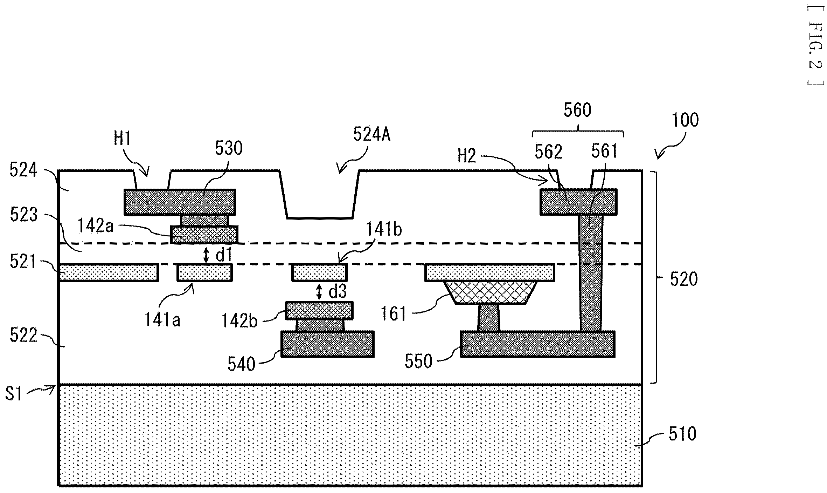

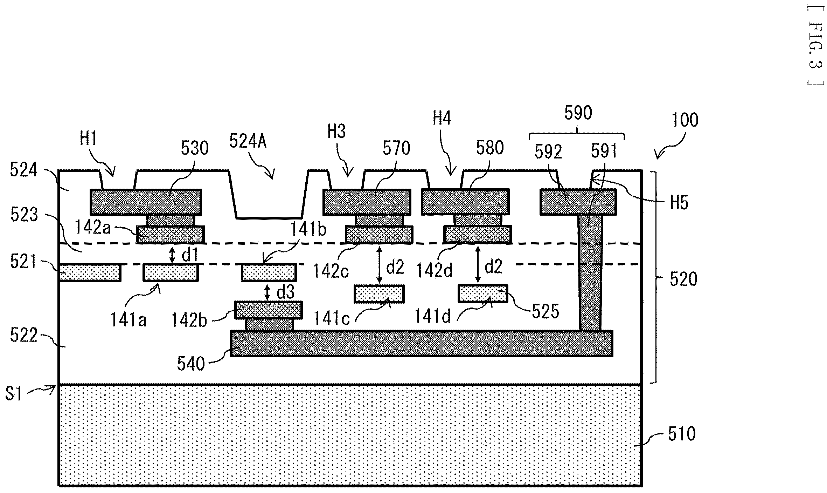

FIGs. 2 and 3 illustrate an example of a cross-sectional configuration of the PIC substrate 100. FIG. 2 illustrates an example of a cross-sectional configuration of a certain portion of the PIC substrate 100; FIG. 3 illustrates an example of a cross-sectional configuration of a different portion from FIG. 2 in the PIC substrate 100. The PIC substrate 100 is, for example, as illustrated in FIGs. 2 and 3, a stack including a silicon photonics layer 520 and a supporting substrate 510 that are bonded to each other. The supporting substrate 510 is, for example, a semiconductor substrate such as a Si substrate.

The silicon photonics layer 520 includes, for example, as illustrated in FIGs. 2 and 3, the Si layer 521, and an interlayer insulating film 522 and a buried oxide (BOX) layer 523 that sandwich the Si layer 521 between them. The silicon photonics layer 520 further includes, for example, as illustrated in FIGs. 2 and 3, a SiN layer 525 provided in the interlayer insulating film 522 and an interlayer insulating film 524 in contact with the BOX layer 523. The SiN layer 525 is provided in a different layer from the Si layer 521. The silicon photonics layer 520 includes a stack (the Si layers 521 and 525, the interlayer insulating film 522, and the BOX layer 523) obtained by removing a Si substrate 620 from a PIC substrate 600 to be described later.

The BOX layer 523 includes a SiO₂ layer. The interlayer insulating film 522 has a configuration in which multiple patterned wiring layers and via coupling the wiring layers are formed in a plurality of SiO₂ layers stacked on top of another. In the interlayer insulating film 522, for example, as illustrated in FIGs. 2 and 3, wirings (for example, wirings 540 and 550) each including a wiring layer and a via are provided, and the SiN layer 525 and a GePD 526 are further provided. A surface of the interlayer insulating film 522 serves as a bottom surface of the silicon photonics layer 520. The surface of the interlayer insulating film 522 and a surface of the supporting substrate 510 are in contact with each other, and the bonded surfaces of the interlayer insulating film 522 and the supporting substrate 510 serve as an interface S1. The interlayer insulating film 524 has a configuration in which multiple patterned wiring layers and via coupling the wiring layers are formed in a plurality of SiO₂ layers stacked on top of another. In the interlayer insulating film 524, for example, as illustrated in FIGs. 2 and 3, wirings (for example, wirings 530, 560, 570, and 580) each including a wiring layer and a via are provided. The wirings 530, 560, 570, and 580 are formed, for example, using a metallic material such as copper, tungsten, gold, platinum, cobalt, or ruthenium.

In the interlayer insulating film 522, for example, as illustrated in FIGs. 2 and 3, a heater layer 142b coupled to a wiring including a wiring layer and a via is provided. The heater layer 142b is coupled to the wiring 540. In the interlayer insulating film 524, for example, as illustrated in FIGs. 2 and 3, heater layers 142a, 142c, and 142d coupled to wirings each including a wiring layer and a via are provided. The heater layer 142a is coupled to the wiring 530. The heater layer 142c is coupled to the wiring 570. The heater layer 142d is coupled to the wiring 580.

The heater layers 142a, 142b, 142c, and 142d are disposed in different positions from one another in planar view. The heater layer 142a is disposed in a position not opposed to the heater layers 142b, 142c, and 142d in planar view. The heater layer 142b is disposed in a position not opposed to the heater layers 142a, 142c, and 142d in planar view. The heater layer 142c is disposed in a position not opposed to the heater layers 142a, 142b, and 142d in planar view. The heater layer 142d is disposed in a position not opposed to the heater layers 142a, 142b, and 142c in planar view.

In the interlayer insulating films 522 and 524, for example, as illustrated in FIG. 2, the wiring 560 coupled to the wiring 550 is provided. The wiring 560 includes, for example, a via 561 coupled to the wiring 550 and a wiring layer 562 coupled to the via 561. In the interlayer insulating films 522 and 524, for example, as illustrated in FIG. 3, a wiring 590 coupled to the wiring 540 is provided. The wiring 590 includes, for example, a via 591 coupled to the wiring 540 and a wiring layer 592 coupled to the via 591. The wiring 590 includes, for example, a metallic material such as copper, tungsten, gold, platinum, cobalt, or ruthenium.

The Si layer 521 is provided with, for example, optical waveguides WG1, WG2, and WG3 illustrated in FIG. 1. The optical waveguides WG1, WG2, and WG3 allow transmission of an optical signal. The optical waveguide WG1 extends, for example, from an end of the PIC layer 520 to the antenna 140 through the modulator 110, the splitter 120, and the circulator 130. The optical waveguide WG2 is an optical waveguide that branches off from the optical waveguide WG1 at the splitter 120, and is coupled to one of input ports of the coupler 150 (an optical waveguide 151 to be described later). The optical waveguide WG3 is an optical waveguide that branches off from the optical waveguide WG1 at the circulator 130, and is coupled to the other input port of the coupler 150 (an optical waveguide 152 to be described later). Laser light L emitted from the laser chip 200 enters the optical waveguide WG1. The laser light L propagated through the optical waveguide WG1 is input to the modulator 110.

The modulator 110 is configured to modulate a frequency of laser light L in accordance with the control by the controller 310. For example, the modulator 110 is configured to modulate laser light L to cause the frequency to increase linearly with time and then modulate laser light L to cause the frequency to decrease linearly with time. For example, the modulator 110 is configured to periodically repeat such a linear increase and decrease of the frequency and output a transmission signal Stx generated through that to the splitter 120 through the optical waveguide WG1. The transmission signal Stx is a chirp signal obtained by laser light L being subjected to frequency modulation by the modulator 110. The optical waveguide WG1 allows transmission of the chirp signal. The modulator 110 is formed, for example, in the Si layer 521. The modulator 110 is formed, for example, using a Mach-Zehnder interferometer in which a Si waveguide branches off into two. At this time, the modulator 110 forms a PN junction in one of the branched waveguides, and applies a voltage of an alternating-current waveform to that PN junction, which changes the refractive index due to the carrier-plasma effect, thereby making it possible to generate a signal of light with a phase changed. The modulator 110 synthesizes a waveform of the generated signal and a waveform of the original signal at the exit of the interferometer, thereby making it possible to modulate a phase of the original signal.

The splitter 120 splits a transmission signal Stx into a transmission signal Stx (a transmission signal Stx1) for emission to a target TG and a transmission signal Stx (a transmission signal Stx2) for interference with a return signal Srx in the coupler 150. The transmission signal Stx1 has most of energy of the transmission signal Stx. The transmission signal Stx2 is a reference signal that has a much smaller amount of energy than the energy of the transmission signal Stx1 and yet an amount of energy enough to allow it to interfere with a return signal Srx in the coupler 150. The return signal Srx corresponds to a signal with a phase delayed in relation to the transmission signal Stx1. The return signal Srx is generated by the transmission signal Stx being reflected from the target TG.

The splitter 120 is a device having three ports. In the splitter 120, a first port and a third port are present in the optical waveguide WG1. A second port is present in the optical waveguide WG2. The optical waveguide WG2 is disposed adjacent to a portion between the first port and the third port within the optical waveguide WG1. Thus, an optical signal propagated through the optical waveguide WG1 leaks into the optical waveguide WG2. An optical signal leaked from the optical waveguide WG1 into the optical waveguide WG2 is propagated, as a transmission signal Stx2, through the optical waveguide WG2. The optical waveguide WG2 allows transmission of the transmission signal Stx2.

The circulator 130 is a device having three ports, and is configured to transmit a transmission signal Stx1 input from a first port to a third port and transmit a return signal Srx input from the third port to a second port. In the circulator 130, the optical waveguide WG1 is coupled to the first port, and the optical waveguide WG2 is coupled to the second port. An optical waveguide extending from the antenna 140 is coupled to the third port. The circulator 130 is configured to serve, for example, to rectify a transmitting optical signal and an optical signal received from an antenna 141. It is possible to use the same circuit as the coupler 150 in the circulator 130; in this case, because of a structure in which an optical waveguide including Si branches, the signal strength of each of a transmission signal and a received signal is divided 50%/50% at their respective branch. By dealing with this half a signal, it becomes possible to separate transmitting light and received light.

The antenna 140 has a function of radiating a signal of light guided from a waveguide into free space and receiving a signal from free space. The antenna 140 may have, for example, a function of a mechaless scanner having no drive unit. The antenna 140 is configured to transmit a transmission signal Stx1 to a target TG, for example, through a lens and receive a return signal Srx, for example, through the lens. The lens is bonded to, within a surface of the PIC substrate 100, a region (an entrance/exit surface) opposed to the antenna 141. The transmission signal Stx1 is output from the entrance/exit surface, and the return signal Srx enters the entrance/exit surface. For example, a lens is bonded to the entrance/exit surface, and a transmission signal Stx is output from the antenna 140 to the outside through the lens and the entrance/exit surface, and a return signal Srx enters from the outside to the antenna 140 through the lens and the entrance/exit surface.

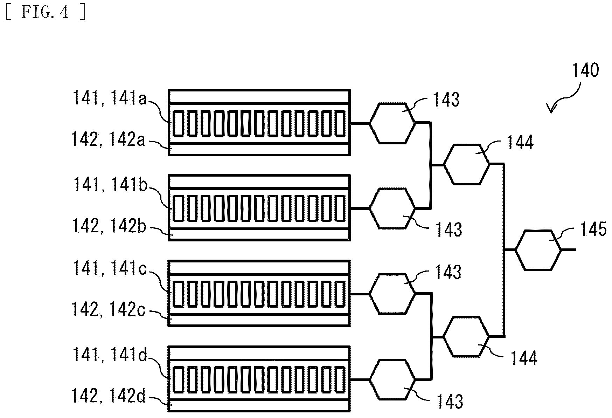

For example, as illustrated in FIG. 4, the antenna 140 includes a plurality of (for example, four) antenna bodies each including an antenna 141 and a heater layer 142 provided in a position opposed to the antenna 141. The respective antenna bodies extend in a common direction, and the plurality of antenna bodies is arranged in a direction perpendicular to the extension direction of the antenna bodies at predetermined intervals.

Here is assumed that four antenna bodies are provided. At this time, the antennas 141 include, for example, two Si waveguides 141a and 141b provided in the Si layer 521 and two SiN waveguides 141c and 141d provided in the SiN layer 525. That is, the antennas 141 include, for example, the Si waveguides 141a and 141b and the SiN waveguides 141c and 141d that differ in material from each another. The Si waveguides 141a and 141b include, for example, a diffraction grating provided in the Si layer 521. The SiN waveguides 141c and 141d include, for example, a diffraction grating provided in the SiN layer 525.

The diffraction grating is, for example, a device in which a plurality of grooves or through-holes is arranged in a line in the Si layer 521 at a pitch of several hundreds of nm. The antenna 141 is configured to output a transmission signal Stx1 having a peak in a certain point according to the pitch of the diffraction grating to a surface of the Si layer 521 at a predetermined angle in accordance with the control by the controller 310.

The heater layer 142 is a metal film configured to serve as a heater for the waveguide WG1. The heater layer 142 includes, for example, the heater layer 142a disposed to be separated by a predetermined gap from the Si waveguide 141a (the waveguide WG1) and the heater layer 142b disposed to be separated by a predetermined gap from the Si waveguide 141b (the waveguide WG1). The heater layer 142 further includes, for example, the heater layer 142c disposed to be separated by a predetermined gap from the SiN waveguide 141c (the waveguide WG1) and the heater layer 142d disposed to be separated by a predetermined gap from the SiN waveguide 141d (the waveguide WG1). The heater layer 142a is, for example, a resistance element extending along the Si waveguide 141a. The heater layer 142b is, for example, a resistance element extending along the Si waveguide 141b. The heater layer 142c is, for example, a resistance element extending along the SiN waveguide 141c. The heater layer 142d is, for example, a resistance element extending along the SiN waveguide 141d.

The heater layers 142 (142a, 142b, 142c, and 142d) are formed using, for example, a material such as TiN, W, HfOx, ITO, or IGZO. The wiring layers in the interlayer insulating films 522 and 524 have a resistance value lower than resistance values of the heater layers 142 (142a, 142b, 142c, and 142d). In a case where the wiring layers in the interlayer insulating films 522 and 524 and the heater layers 142 (142a, 142b, 142c, and 142d) include the same material, the wiring layers in the interlayer insulating films 522 and 524 have a film thickness greater than film thicknesses of the heater layers 142 (142a, 142b, 142c, and 142d).

The heater layer 142a is configured to heat the Si waveguide 141a by a current being applied to the resistance element in accordance with the control from the controller 310 and thereby causing the resistance element to generate heat. In the Si waveguide 141a, the refractive index is changed by the heat applied by the heater layer 142a, and a transmission signal Stx1 is output at an angle according to the change of the refractive index. The heater layer 142b is configured to heat the Si waveguide 141b by a current being applied to the resistance element in accordance with the control from the controller 310 and thereby causing the resistance element to generate heat. In the Si waveguide 141b, the refractive index is changed by the heat applied by the heater layer 142b, and a transmission signal Stx1 is output at an angle according to the change of the refractive index.

The heater layer 142c is configured to heat the SiN waveguide 141c by a current being applied to the resistance element in accordance with the control from the controller 310 and thereby causing the resistance element to generate heat. In the SiN waveguide 141c, the refractive index is changed by the heat applied by the heater layer 142c, and a transmission signal Stx1 is output at an angle according to the change of the refractive index. The heater layer 142d is configured to heat the SiN waveguide 141d by a current being applied to the resistance element in accordance with the control from the controller 310 and thereby causing the resistance element to generate heat. In the SiN waveguide 141d, the refractive index is changed by the heat applied by the heater layer 142d, and a transmission signal Stx1 is output at an angle according to the change of the refractive index. That is, the antenna 141 is configured to sweep the transmission signal Stx1 in a predetermined region of the outside in accordance with the control by the controller 310.

Here, the heater layer 142a is provided in the interlayer insulating film 524, and is disposed in a position opposed to the supporting substrate 510 with the Si waveguide 141a interposed therebetween. The distance between the heater layer 142a and the Si waveguide 141a is d1. The heater layer 142b is provided in the interlayer insulating film 522, and is disposed in a position opposed to the supporting substrate 510 with the wiring 540 interposed therebetween. The heater layer 142b is disposed between the Si waveguide 141b and the supporting substrate 510. The distance between the heater layer 142b and the Si waveguide 141b is d3. The distance d3 may be equal to the distance d1, or may be different from the distance d1. The heater layer 142c is provided in the interlayer insulating film 524, and is disposed in a position opposed to the supporting substrate 510 with the SiN waveguide 141c interposed therebetween. The distance between the heater layer 142c and the SiN waveguide 141c is d2. The heater layer 142d is provided in the interlayer insulating film 524, and is disposed in a position opposed to the supporting substrate 510 with the SiN waveguide 141d interposed therebetween. The distance between the heater layer 142d and the SiN waveguide 141d is d2. The distance d2 is different from the distances d1 and d3. The heater layer 142b and the heater layers 142c and 142d are provided in different layers from each other. The heater layer 142a and the heater layers 142c and 142d may be provided in the same layer, or may be provided in different layers from each other.

In a case where four antenna bodies are provided, the antenna 140 further includes, for example, as illustrated in FIG. 4, four optical switches 143, one for each antenna body, and two optical switches 144, one for each two optical switches 143. Each optical switch 143 is a switch to connect and disconnect an optical waveguide between two terminals (a first terminal and a second terminal). Each optical switch 144 is a switch to connect and disconnect an optical waveguide between two terminals (a third terminal and a fourth terminal). The antenna 140 further includes, for example, as illustrated in FIG. 4, one optical switch 145 coupled to the two optical switches 144. Each optical switch 145 is a switch to connect and disconnect an optical waveguide between two terminals (a fifth terminal and a sixth terminal).

In each optical switch 143, the first terminal is coupled to the antenna body, and the second terminal is coupled to the second terminal of another optical switch 143 and the third terminal of the optical switch 144. In each optical switch 144, the third terminal is coupled to the second terminals of the two optical switches 143, and the fourth terminal is coupled to the fourth terminal of another optical switch 144 and the fifth terminal of the optical switch 145. In the optical switch 145, the fifth terminal is coupled to the fourth terminals of the two optical switches 144, and the sixth terminal is coupled to the second port of the circulator 130.

The antenna body includes, for example, a diffraction grating provided in the Si layer 521. The diffraction grating is, for example, a device in which a plurality of grooves is arranged in a line in the Si layer 521 at a pitch of several hundreds of nm. The depth of the grooves is, for example, several hundreds of nm, and the thickness of a portion, within the Si layer 521, corresponding to a base of the diffraction grating is, for example, several hundreds of nm.

In the antenna 141, a transmission signal Stx1 having a peak in a certain point according to the pitch of the diffraction grating is output to the surface of the Si layer 521 at a predetermined angle. The heater layer 142 is a resistance element extending along the antenna 141. The heater layer 142 heats the antenna 141 by a current being applied to the resistance element in accordance with the control from the controller 310 and thereby causing the resistance element to generate heat. In the antenna 141, the refractive index is changed by the heat applied by the heater layer 142, and a transmission signal Stx1 is output at an angle according to the change of the refractive index.

For example, the antenna 140 is configured to turn on/off the four optical switches 143, the two optical switches 144, and the one optical switch 145 in accordance with the control from the controller 310. Thus, the antenna 140 is configured to output a transmission signal Stx1 in a predetermined direction from each antenna body and receive a return signal Srx input from the outside.

The coupler 150 is a device that generates a beat signal Sbt due to interference between a transmission signal Stx2 and a return signal Srx. A frequency of the beat signal Sbt changes according to a frequency difference between the transmission signal Stx2 and the return signal Srx. The frequency difference changes according to the distance from the antenna 141 to a target TG. Therefore, the distance from the antenna 141 to the target TG may be estimated on the basis of the frequency of the beat signal Sbt.

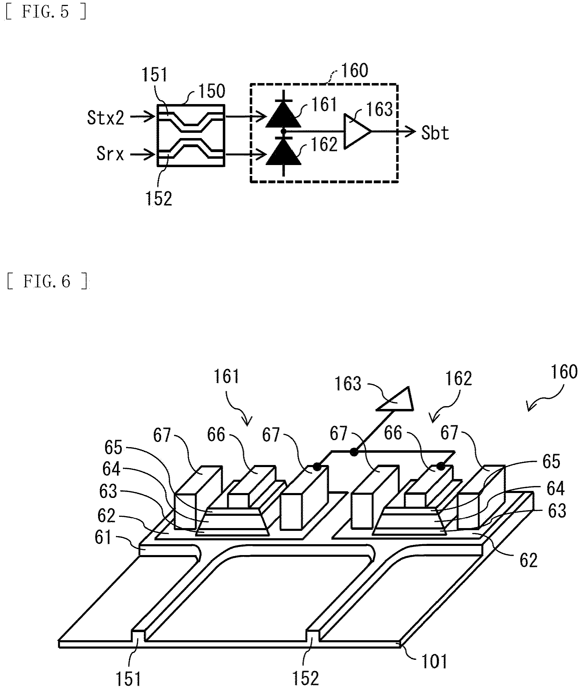

The coupler 150 includes, for example, as illustrated in FIG. 5, the optical waveguide 151 for propagation of a transmission signal Stx2 and the optical waveguide 152 for propagation of a return signal Srx. Each of the optical waveguides 151 and 152 is, for example, a rib waveguide. The optical waveguides 151 and 152 are disposed to cause their respective portions to be adjacent to each other, which causes a transmission signal Stx2 propagated through the optical waveguide 151 and a return signal Srx propagated through the optical waveguide 152 to interfere with each other, thus a beat signal Sbt is generated.

The detector 160 is a device that extracts a beat signal Sbt from signals propagated through the optical waveguides 151 and 152 in accordance with the control by the controller 310. The detector 160 includes, for example, as illustrated in FIG. 6, GePDs 161 and 162 coupled to each other in series and a transimpedance amplifier 163 coupled to a coupling node of the GePD 161 and the GePD 162.

The GePDs 161 and 162 are detectors configured to detect signals guided through the optical waveguides 151 and 152. The GePD 161 is, for example, as illustrated in FIG. 5, a PIN photodiode coupled to the optical waveguide 151. The GePD 162 is, for example, as illustrated in FIG. 5, a PIN photodiode coupled to the optical waveguide 152. The GePDs 161 and 162 include, for example, a Si terrace 61 coupled to the optical waveguides 151 and 152 and a p-type Si layer 62 formed by ion implantation of B into the Si terrace 61. The Si terrace 61 and the optical waveguides 151 and 152 are formed in the common Si layer 521.

The GePDs 161 and 162 further include, for example, an island i-type Ge layer 63 and a two-dimensional growth i-type Ge layer 64 that are formed on the p-type Si layer 62, and an n-type Ge layer 65 formed by ion implantation of P into the two-dimensional growth i-type Ge layer 64. A stack including the p-type Si layer 62, the island i-type Ge layer 63, the two-dimensional growth i-type Ge layer 64, and the n-type Ge layer 65 forms a PIN photodiode. In this PIN photodiode, the island i-type Ge layer 63 that becomes effectively p-type and a depletion layer is not formed therein is thin, and the thick two-dimensional growth i-type Ge layer 64 becomes a depletion layer, thus the sensitivity is improved.

The GePDs 161 and 162 further include, for example, an n-side electrode 66 in contact with the n-type Ge layer 65 and a p-side electrode 67 in contact with the p-type Si layer 62. The p-side electrode 67 of the GePD 161 and the n-side electrode 66 of the GePD 162 are coupled by a wiring, and the wiring coupling the p-side electrode 67 of the GePD 161 and the n-side electrode 66 of the GePD 162 is coupled to an input port of the transimpedance amplifier 163.

The transimpedance amplifier 163 performs the impedance transformation on current signals photoelectrically converted by the GePDs 161 and 162 and amplifies the current signals, and outputs a beat signal Sbt as a voltage signal.

In the interlayer insulating film 524, for example, as illustrated in FIGs. 2 and 3, openings H1, H2, H3, H4, and H5 and a recess 524A are formed. The wiring 530 is exposed on a bottom surface of the opening H1. The wiring 560 is exposed on a bottom surface of the opening H2. The wiring 570 is exposed on a bottom surface of the opening H3. The wiring 580 is exposed on a bottom surface of the opening H4. The wiring 590 is exposed on a bottom surface of the opening H5. The recess 524A is provided in a location opposed to the Si waveguide 141b, and a bottom surface of the recess 524A is provided in a location separated by a predetermined distance away from the Si waveguide 141b. The recess 524A is a heat dissipation control section provided in a location opposed to the heater layer 142b with the Si waveguide 141b interposed therebetween. The recess 524A is a structure for controlling the heat dissipation in a path into which heat radiated from the heater layer 142b is released from a surface of the interlayer insulating film 524 via the Si waveguide 141b (hereinafter, referred to as the "heat dissipation path of the heater layer 142b"). By providing the recess 524A on the interlayer insulating film 524, the heat dissipation in the heat dissipation path of the heater layer 142b is reduced because of the adiabaticity of an air gap (air) in the recess 524A.

### <Signal Processing Substrate 300>

The signal processing substrate 300 is a substrate configured to process a signal detected by the PIC substrate 100 (for example, the GePDs 161 and 162) and control the heater layer 142. The signal processing substrate 300 includes, for example, as illustrated in FIG. 1, the controller 310, a DAC 320, an ADC 330, and a fast Fourier transform (FFT) 340.

The controller 310 is configured to generate, for example, a control signal for controlling a laser 210, the modulator 110, the antenna 140, and the detector 160 and output the control signal to the DAC 320. The controller 310 is configured to further generate, for example, a control signal for controlling the ADC 330 and output the control signal to the ADC 330. The DAC 320 is configured to convert a control signal input from the controller 310 from digital to analog and output the analog control signal to the laser 210, the modulator 110, the antenna 140, and the detector 160. The ADC 330 is configured to convert a beat signal Sbt input from the detector 160 from analog to digital and output the digital beat signal Sbt to the FFT 340. The FFT 340 is configured to perform FFT on the digital beat signal Sbt input from the ADC 330 and, on the basis of the power spectral density obtained through that, derive a frequency of the beat signal Sbt. The FFT 340 is configured to output information about the derived frequency (frequency information) to the controller 310. The controller 310 is configured to output the frequency information input from the FFT 340 to the outside in accordance with the control from the outside.

The signal processing substrate 300 includes, for example, a Si substrate. In the Si substrate, for example, signal processing circuits such as the controller 310, the DAC 320, the ADC 330, and the FFT 340 are formed. In the signal processing substrate 300, an interlayer insulating film is formed on the Si substrate. The interlayer insulating film has a configuration in which multiple patterned wiring layers and via coupling the wiring layers are formed in a plurality of SiO₂ layers stacked on top of another. In the interlayer insulating film, wirings and via in the signal processing circuits, wirings and via for electrically coupling the signal processing circuits to the PIC substrate 100 and the laser chip 200, etc. are formed.

### <Manufacturing Method>

Subsequently, a method for manufacturing the ranging device 1000 is described.

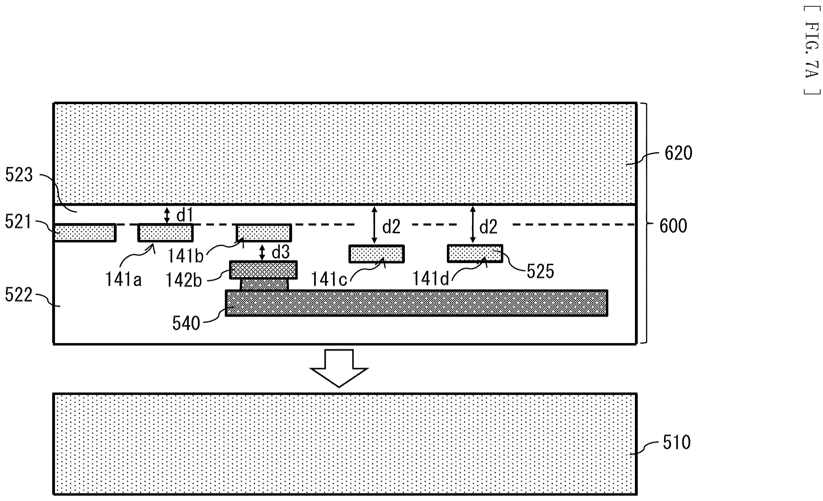

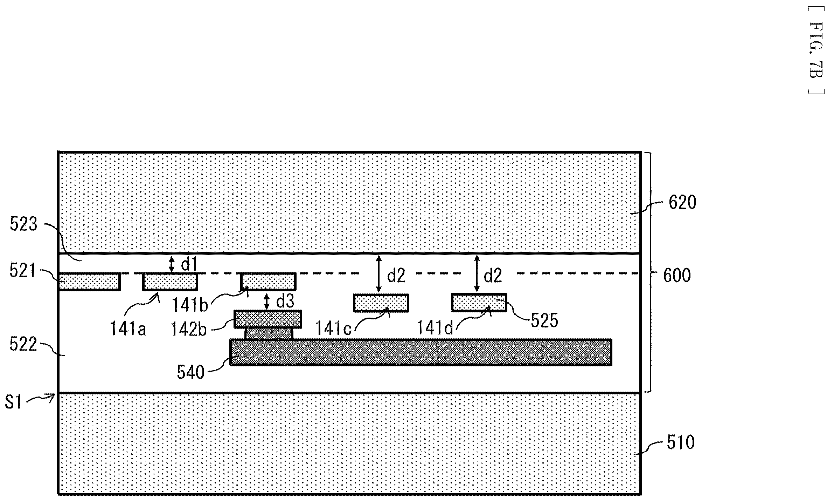

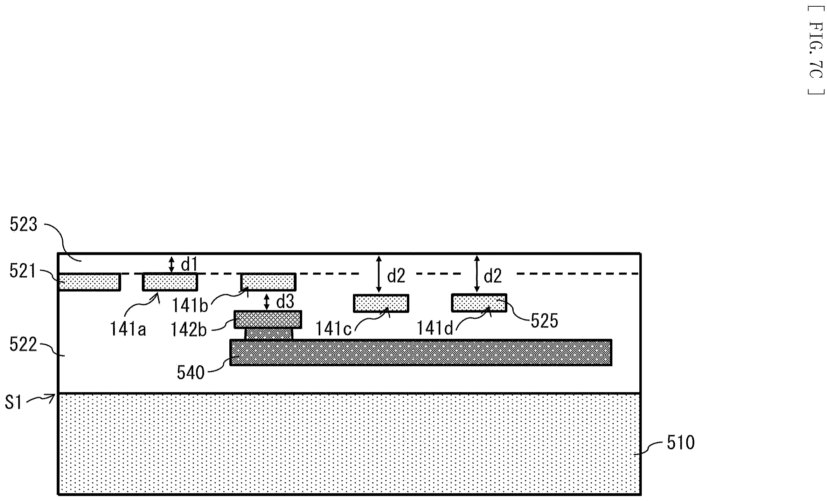

FIGs. 7A to 7D are cross-sectional views for explaining processes of manufacturing the ranging device 1000. First, the PIC substrate 600 is prepared (FIG. 7A). The PIC substrate 600 is a substrate in which the BOX layer 523, the Si layer 521, the SiN layer 525, and the interlayer insulating film 522 are formed on the Si substrate 620. Next, the PIC substrate 600 and the signal processing substrate 300 are bonded to cause the surface of the interlayer insulating film 522 and the surface of the supporting substrate 510 to be opposed to each other (FIGs. 7A and 7B). Next, the Si substrate 620 in the PIC substrate 600 is removed (FIG. 7C). Thus, the BOX layer 523 is exposed.

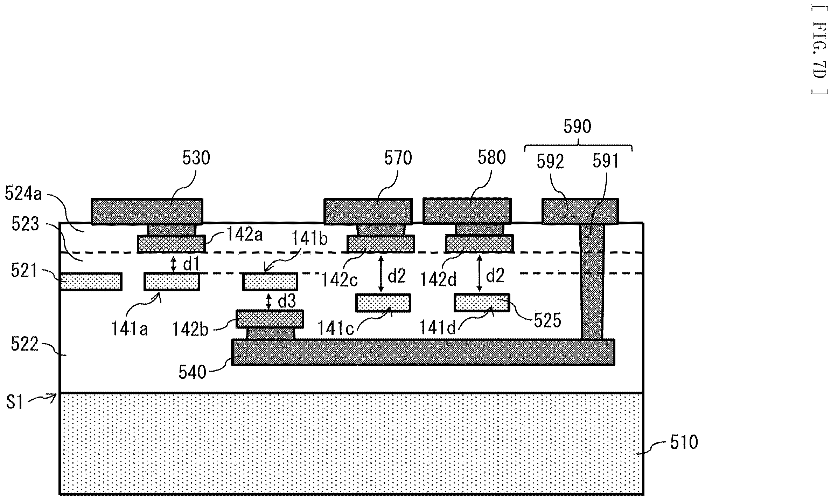

Next, an interlayer insulating film 524a is formed on the BOX layer 523, and after that, a predetermined trench is formed in the interlayer insulating film 524a, the BOX layer 523, and the interlayer insulating film 522, and a film of a metallic material is formed to cause the formed trench to be buried, thereby the wirings 530, 570, 580, and 590 are formed (FIG. 7D). Then, an interlayer insulating film is formed on the entire surface including the interlayer insulating film 524a, thereby the interlayer insulating film 524 is formed, and after that, the openings H1, H3, H4, and H5 are formed in predetermined locations of the interlayer insulating film 524. Thus, the wirings 530, 560, 570, 580, and 590 are exposed on the bottom surfaces of the openings H1, H3, H4, and H5. Furthermore, the recess 524A is formed in a predetermined location of the interlayer insulating film 524. After that, for example, wire bonding is performed on the wirings 530, 560, 570, 580, and 590 through the openings H1, H3, H4, and H5, thereby the PIC layer 520 and the signal processing substrate 300 are electrically coupled. In this way, the ranging device 1000 is manufactured.

### <Effects>

Subsequently, effects of the ranging device 1000 are described.

In the present embodiment, the silicon photonics layer 520 and the supporting substrate 510 are bonded to each other, and the heater layers 142a, 142c, and 142d configured to serve as a heater for the waveguide WG1 are disposed to be opposed to the supporting substrate 510 with the waveguide WG1 interposed therebetween. Thus, as compared with a phase shifter in which a waveguide and a heater layer are stacked on an SOI substrate, the heater layers 142a, 142c, and 142d are disposed in positions away from the supporting substrate 510. Furthermore, the waveguide WG1 is present in heat propagation paths from the heater layers 142a, 142c, and 142d to the supporting substrate 510. Consequently, it is possible to efficiently propagate heat generated in the heater layers 142a, 142c, and 142d to the waveguide, and, furthermore, it is possible to reduce the proportion of heat propagated to the supporting substrate 510. Therefore, it is possible to improve the power efficiency of a phase shifter.

In the present embodiment, the silicon photonics layer 520 is provided with the heater layers 142a and 142b disposed to be separated by the predetermined gaps d1 and d3 from the Si waveguides 141a and 141b, respectively, and the heater layers 142c and 142d disposed to be separated by the predetermined gap d2 from the SiN waveguides 141c and 141d, respectively. Here, an appropriate length as the distance between the Si waveguide 141a and the heater layer 142a, an appropriate length as the distance between the Si waveguide 141b and the heater layer 142b, and an appropriate length as the distance between the SiN waveguides 141c and 141d and the heater layers 142c and 142d are different from one another. Thus, in the silicon photonics layer 520, for example, the heater layer 142a, the heater layer 142b, and the heater layers 142c and 142d are provided in different layers from one another, and the gaps d1, d2, and d3 are controlled independently, thus it is possible to cause the above-described gaps to be an appropriate length in view of the power efficiency and loss. Therefore, it is possible to improve the power efficiency of a phase shifter.

In the present embodiment, the heater layer 142b is provided between the Si waveguide 141b and the supporting substrate 510, and the heater layer 142b is disposed in a position not opposed to the other heater layers 142a, 142c, and 142d in planar view. Thus, the Si waveguide 141b disposed in a position opposed to the heater layer 142b is heated mainly by heat radiated from the heater layer 142b, and heat radiated from the other heater layers 142a, 142c, and 142d has less impact on the Si waveguide 141b. Therefore, it is possible for the Si waveguide 141b to be independently controlled by the heater layer 142b.

In the present embodiment, the recess 524A is provided, as a heat dissipation control section, in a location opposed to the heater layer 142b with the Si waveguide 141b interposed therebetween. Thus, the heat dissipation in the heat dissipation path of the heater layer 142b is reduced because of the adiabaticity of an air gap (air) in the recess 524A. As a result, it is possible to improve the power efficiency of a phase shifter including the heater layer 142b and the Si waveguide 141b.

### <2. Modification Examples>

Subsequently, modification examples of the ranging device 1000 according to the above-described embodiment are described.

### <Modification Example 2-1>

FIG. 8 illustrates an example of a cross-sectional configuration of the ranging device 1000 according to a modification example. In the above-described embodiment, for example, as illustrated in FIG. 8, a heatsink layer 630 may be provided in a position opposed to the heater layer 142b with the Si waveguide 141a interposed therebetween. The heatsink layer 630 is, for example, a metal film independent of a circuit wiring. The heatsink layer 630 is formed, for example, using a metallic material such as copper, tungsten, gold, platinum, cobalt, or ruthenium. The heatsink layer 630 may be formed, for example, using a material such as TiN, W, HfOx, ITO, or IGZO. In this way, by providing the heatsink layer 630 in the position opposed to the heater layer 142b with the Si waveguide 141a interposed therebetween, it becomes possible to adjust the heat dissipation in a heat dissipation path of the heater layer 142a. As a result, it is possible to adjust the power efficiency and thermal response of a phase shifter.

### <Modification Example 2-2>

FIG. 9 illustrates an example of a cross-sectional configuration of the ranging device 1000 according to a modification example. In the above-described embodiment, for example, as illustrated in FIG. 9, a trench section 524B may be provided instead of the recess 524A. The trench section 524B has a depth that reaches the Si waveguide 141b, and, for example, as illustrated in FIGs. 9 and 10, a bottom surface of the trench section 524B is formed in a recessed shape (a recess 524C) to surround three sides (a surface on the side opposite to the heater layer 142b and both side surfaces) of the Si waveguide 141b. It is to be noted that FIG. 10 illustrates an example of a planar configuration of the bottom surface of the trench section 524B. Thus, the heat dissipation in the heat dissipation path of the heater layer 142b is reduced because of the adiabaticity of an air gap (air) in the trench section 524B. As a result, it is possible to improve the power efficiency of a phase shifter including the heater layer 142b and the Si waveguide 141b.

### <Modification Example 2-3>

FIG. 11 illustrates an example of a cross-sectional configuration of the ranging device 1000 according to a modification example. In the above-described embodiment, for example, as illustrated in FIG. 11, a heatsink section 524D that is a metal film independent of a circuit wiring may be provided on the bottom surface of the recess 524A. For example, multiple recesses and projections are formed on a surface of the heatsink section 524D. The heatsink section 524D is formed, for example, using a metallic material such as copper, tungsten, gold, platinum, cobalt, or ruthenium. The heatsink section 524D may be formed, for example, using a material such as TiN, W, HfOx, ITO, or IGZO. In this way, by providing the heatsink section 524D on the bottom surface of the recess 524A, it becomes possible to adjust the heat dissipation in a heat dissipation path of the heater layer 142b. As a result, it is possible to adjust the power efficiency and thermal response of a phase shifter.

### <Modification Example 2-4>

FIG. 12 illustrates an example of a cross-sectional configuration of the ranging device 1000 according to a modification example. In the embodiment and its modification examples described above, the heater layer 142 may further include, for example, as illustrated in FIG. 12, a heater layer 142e disposed between the Si waveguide 141a and the supporting substrate 510. The heater layer 142e is provided in the interlayer insulating film 522, and, for example, is coupled to a wiring 640 in the interlayer insulating film 522. The distance between the heater layer 142e and the Si waveguide 141a is d1. The heater layer 142e is disposed in a position opposed to the heater layer 142a with the Si waveguide 141a interposed therebetween. In this way, by providing the heater layers 142a and 142e above and below the Si waveguide 141a, it becomes possible to adjust the power efficiency and thermal response of a phase shifter.

### <Modification Example 2-5>

FIGs. 13 and 14 illustrate examples of a cross-sectional configuration of the ranging device 1000 according to a modification example. In the embodiment and its modification examples described above, for example, as illustrated in FIGs. 13 and 14, the signal processing substrate 300 may be provided instead of the supporting substrate 510. At this time, a surface of the silicon photonics layer 520 (the interlayer insulating film 522) and a surface of the signal processing substrate 300 are in contact with each other, and the bonded surfaces of the interlayer insulating film 522 and the signal processing substrate 300 are an interface S2.

In the present modification example, the wiring 560 includes, for example, as illustrated in FIG. 13, the via 561 coupled to the wiring 550, the wiring layer 562 coupled to the via 561, and a via 563 coupled to the wiring layer 562 and a wiring layer in the signal processing substrate 300. In the present modification example, the wiring 530 includes, for example, as illustrated in FIG. 13, a wiring layer 531 coupled to the heater layer 142a and a via 532 coupled to the wiring layer 531 and a wiring layer in the signal processing substrate 300. In the present modification example, the wiring 590 includes, for example, as illustrated in FIG. 14, the via 591 coupled to the wiring 540, the wiring layer 592 coupled to the via 591, and a via 593 coupled to the wiring layer 592 and a wiring layer in the signal processing substrate 300.

In this way, the silicon photonics layer 520 and the signal processing substrate 300 are bonded to each other; thus, as compared with the above-described first embodiment, it is possible to make the wiring coupling the silicon photonics layer 520 and the signal processing substrate 300 shorter. As a result, it is possible to decrease the resistance of the wiring coupling the silicon photonics layer 520 and the signal processing substrate 300, and it is possible to improve the power efficiency of the ranging device 1000.

### <Modification Example 2-6>

FIG. 15 illustrates an example of a cross-sectional configuration of the ranging device 1000 according to a modification example. In modification example 2-5 described above, for example, as illustrated in FIG. 15, the laser chip 200 may be mounted on the signal processing substrate 300. At this time, for example, the laser chip 200 is mounted on the signal processing substrate 300 to cause an active layer 210 of the laser chip 200 and the Si layer 521 or the SiN layer 525 of the silicon photonics layer 520 to be disposed on the same level. In this way, by mounting the laser chip 200 on the signal processing substrate 300, it becomes possible to cause laser light L emitted from the laser chip 200 (the active layer 210) to enter the silicon photonics layer 520.

### <Modification Example 2-7>

FIG. 16 illustrates an example of a cross-sectional configuration of the ranging device 1000 according to a modification example. In the embodiment and modification examples 2-1, 2-2, 2-3, and 2-4 described above, for example, as illustrated in FIG. 16, a wiring substrate 800 may be provided instead of the supporting substrate 510. The wiring substrate 800 includes a plurality of SiO₂ layers stacked on a supporting substrate. In the wiring substrate 800, wirings in which multiple patterned wiring layers and via coupling the wiring layers are formed are provided in the plurality of SiO₂ layers.

In the present modification example, for example, as illustrated in FIG. 16, the signal processing substrate 300 is mounted on the silicon photonics layer 520. At this time, a wiring 650 includes, for example, as illustrated in FIG. 16, a wiring layer 651 coupled to the signal processing substrate 300 and a via 652 coupled to the wiring layer 651 and a wiring layer in the wiring substrate 800. The signal processing substrate 300 is electrically coupled to the wiring substrate 800 through the wiring 650 formed in the silicon photonics layer 520. Furthermore, the wiring 590 includes, for example, as illustrated in FIG. 16, the via 591 coupled to the wiring 540, the wiring layer 592 coupled to the via 591, and the via 593 coupled to the wiring layer 592 and a wiring layer in the wiring substrate 800.

In this way, by mounting the signal processing substrate 300 on the silicon photonics layer 520, it becomes possible to add a more sophisticated function. The signal processing substrate 300 and the wiring substrate 800 are enabled to select different process nodes. Furthermore, a plurality of the signal processing substrates 300 may be mounted on the silicon photonics layer 520.

### <3. Application Examples>

A technique according to the present disclosure is applicable to various products. For example, the technique according to the present disclosure may be achieved as an apparatus to be mounted on a mobile body of any kind such as an automobile, an electric vehicle, a hybrid electric vehicle, a motorcycle, a bicycle, a personal mobility, an airplane, a drone, a vessel, a robot, a construction machine, or an agricultural machine (tractor).

FIG. 17 is a block diagram depicting an example of schematic configuration of a vehicle control system 7000 as an example of a mobile body control system to which the technology according to an embodiment of the present disclosure can be applied. The vehicle control system 7000 includes a plurality of electronic control units connected to each other via a communication network 7010. In the example depicted in FIG. 17, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay, or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. A functional configuration of the integrated control unit 7600 illustrated in FIG. 17 includes a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

FIG. 18 depicts an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Incidentally, FIG. 18 depicts an example of photographing ranges of the respective imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Returning to FIG. 17, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM), worldwide interoperability for microwave access (WiMAX), long term evolution (LTE)), LTE-advanced (LTE-A), or the like, or another wireless communication protocol such as wireless LAN (referred to also as wireless fidelity (Wi-Fi), Bluetooth, or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth, near field communication (NFC), or wireless universal serial bus (WUSB). In addition, the in-vehicle device I/F 7660 may establish wired connection by universal serial bus (USB), high-definition multimedia interface (HDMI), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automatic driving, which makes the vehicle to travel autonomously without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example of FIG. 17, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Incidentally, at least two control units connected to each other via the communication network 7010 in the example depicted in FIG. 17 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

It is to be noted that it is possible to mount, on any of the control units and the like, a computer program for implementing each function of the ranging device 1000 described using FIGs. 1 to 16 and the like. In addition, it is also possible to provide a computer-readable recording medium in which such a computer program is stored. The recording medium is, for example, a magnetic disk, an optical disk, a magneto-optical disk, a flash memory, or the like. In addition, the computer program described above may be distributed through a network, for example, without using a recording medium.

In the vehicle control system 7000 described above, it is possible to use the ranging device 1000 described using FIGs. 1 to 16 and the like as a component of LIDAR serving as an environment sensor, a component of optical coherence tomography (OCT) or a spectral module using infrared light and silicon photonics, or a component of a vital sensor, for example.

Moreover, at least some components of the ranging device 1000 described using FIGs. 1 to 16 and the like may be implemented in a module (for example, an integrated circuit module including one die) for the integrated control unit 7600 illustrated in FIG. 17. Alternatively, the ranging device 1000 described using FIGs. 1 to 16 and the like may be implemented by the plurality of control units of the vehicle control system 7000 illustrated in FIG. 17.

Moreover, at least some components of the ranging device 1000 described using FIGs. 1 to 16 and the like may be implemented in a module (for example, an integrated circuit module including one die) for the integrated control unit 7600 illustrated in FIG. 17. Alternatively, the ranging device 1000 described using FIGs. 1 to 16 and the like may be implemented by the plurality of control units of the vehicle control system 7000 illustrated in FIG. 17.

As above, the present disclosure has been described with the embodiment and its modification examples; however, the present disclosure is not limited to the above-described embodiment, etc., and it is possible to make various modifications. It is to be noted that the effects described in the present specification are merely an example. Effects of the present disclosure are not limited to those described in the present specification. The present disclosure may have effects other than those described in the present specification.

Furthermore, for example, the present disclosure may have the following configuration.
(1) A semiconductor device including a stack including a silicon photonics layer and a supporting substrate that are bonded to each other, in which
   the silicon photonics layer includes
      a waveguide through which an optical signal is transmitted, and
      a first metal film disposed to be opposed to the supporting substrate with the waveguide interposed therebetween, and
   the first metal film includes a first heater layer configured to serve as a heater for the waveguide.
(2) The semiconductor device according to (1), in which
   the waveguide includes a first waveguide and a second waveguide that differ in material from each other,
   the first heater layer includes
      a second heater layer disposed to be opposed to the supporting substrate with the first waveguide interposed therebetween, and
      a third heater layer disposed to be opposed to the supporting substrate with the second waveguide interposed therebetween,
   in the silicon photonics layer, the second heater layer and the third heater layer are provided in different layers from each other, and
   a distance between the second heater layer and the first waveguide and a distance between the third heater layer and the second waveguide are different from each other.
(3) The semiconductor device according to (2), in which
   the silicon photonics layer includes a second metal film disposed between the waveguide and the supporting substrate, and
   the second metal film includes a fourth heater layer configured to serve as a heater for the waveguide.
(4) The semiconductor device according to (3), in which the fourth heater layer is disposed in a position not opposed to the first heater layer.
(5) The semiconductor device according to (3), in which the fourth heater layer is disposed in a position opposed to the first heater layer.
(6) The semiconductor device according to (3), in which the silicon photonics layer includes a heat dissipation control section in a location opposed to the fourth heater layer with the waveguide interposed therebetween.
(7) The semiconductor device according to (6), in which the heat dissipation control section includes a recess formed on a surface of the silicon photonics layer.
(8) The semiconductor device according to (7), in which the recess has a bottom surface provided to surround, of surfaces of the waveguide, a surface on a side opposite to the fourth heater layer and both side surfaces.
(9) The semiconductor device according to (6), in which the heat dissipation control section includes a second metal film independent of a circuit wiring.
(10) The semiconductor device according to (9), in which the second metal film includes a heatsink layer including a surface on which a recess and a projection are formed.
(11) The semiconductor device according to any one of (1) to (10), in which
   the silicon photonics layer includes a detector configured to detect a signal guided through the waveguide, and
   the supporting substrate includes a signal processing substrate configured to process the signal detected by the detector and control the first heater layer.
(12) The semiconductor device according to (11), further including a light source chip configured to cause the optical signal to enter the waveguide, in which
   the light source chip is mounted on the signal processing substrate.
(13) The semiconductor device according to any one of (1) to (10), in which
   the silicon photonics layer includes a detector configured to detect a signal guided through the waveguide,
   the supporting substrate includes a wiring substrate configured to transmit the signal detected by the detector and a signal that controls the first heater layer, and
   the semiconductor device includes a signal processing substrate mounted on the silicon photonics layer and electrically coupled to the wiring substrate through the silicon photonics layer.
(14) A ranging device including:
   a light source chip that outputs an optical signal;
   a silicon photonics layer including a waveguide through which the optical signal output from the light source chip is transmitted, and a detector configured to detect a signal guided through the waveguide;
   a supporting substrate bonded to the silicon photonics layer; and
   a signal processing substrate that processes the signal detected by the detector, in which
   the silicon photonics layer further includes a first metal film disposed to be opposed to the supporting substrate with the waveguide interposed therebetween, and
   the first metal film includes a first heater layer configured to serve as a heater for the waveguide.

The present application claims the benefit of Japanese Priority Patent Application JP2023-058936 filed with the Japan Patent Office on March 31, 2023, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. A semiconductor device comprising a stack including a silicon photonics layer and a supporting substrate that are bonded to each other, wherein
the silicon photonics layer includes
a waveguide through which an optical signal is transmitted, and
a first metal film disposed to be opposed to the supporting substrate with the waveguide interposed therebetween, and
the first metal film includes a first heater layer configured to serve as a heater for the waveguide.

2. The semiconductor device according to claim 1, wherein
the waveguide includes a first waveguide and a second waveguide that differ in material from each other,
the first heater layer includes
a second heater layer disposed to be opposed to the supporting substrate with the first waveguide interposed therebetween, and
a third heater layer disposed to be opposed to the supporting substrate with the second waveguide interposed therebetween,
in the silicon photonics layer, the second heater layer and the third heater layer are provided in different layers from each other, and
a distance between the second heater layer and the first waveguide and a distance between the third heater layer and the second waveguide are different from each other.

3. The semiconductor device according to claim 2, wherein
the silicon photonics layer includes a second metal film disposed between the waveguide and the supporting substrate, and
the second metal film includes a fourth heater layer configured to serve as a heater for the waveguide.

4. The semiconductor device according to claim 3, wherein the fourth heater layer is disposed in a position not opposed to the first heater layer.

5. The semiconductor device according to claim 3, wherein the fourth heater layer is disposed in a position opposed to the first heater layer.

6. The semiconductor device according to claim 3, wherein the silicon photonics layer includes a heat dissipation control section in a location opposed to the fourth heater layer with the waveguide interposed therebetween.

7. The semiconductor device according to claim 6, wherein the heat dissipation control section comprises a recess formed on a surface of the silicon photonics layer.

8. The semiconductor device according to claim 7, wherein the recess has a bottom surface provided to surround, of surfaces of the waveguide, a surface on a side opposite to the fourth heater layer and both side surfaces.

9. The semiconductor device according to claim 6, wherein the heat dissipation control section comprises a second metal film independent of a circuit wiring.

10. The semiconductor device according to claim 9, wherein the second metal film comprises a heatsink layer including a surface on which a recess and a projection are formed.

11. The semiconductor device according to claim 1, wherein
the silicon photonics layer includes a detector configured to detect a signal guided through the waveguide, and
the supporting substrate comprises a signal processing substrate configured to process the signal detected by the detector and control the first heater layer.

12. The semiconductor device according to claim 11, further comprising a light source chip configured to cause the optical signal to enter the waveguide, wherein
the light source chip is mounted on the signal processing substrate.

13. The semiconductor device according to claim 1, wherein
the silicon photonics layer includes a detector configured to detect a signal guided through the waveguide,
the supporting substrate comprises a wiring substrate configured to transmit the signal detected by the detector and a signal that controls the first heater layer, and
the semiconductor device comprises a signal processing substrate mounted on the silicon photonics layer and electrically coupled to the wiring substrate through the silicon photonics layer.

14. A ranging device comprising:
a light source chip that outputs an optical signal;
a silicon photonics layer including a waveguide through which the optical signal output from the light source chip is transmitted, and a detector configured to detect a signal guided through the waveguide;
a supporting substrate bonded to the silicon photonics layer; and
a signal processing substrate that processes the signal detected by the detector, wherein
the silicon photonics layer further includes a first metal film disposed to be opposed to the supporting substrate with the waveguide interposed therebetween, and
the first metal film includes a first heater layer configured to serve as a heater for the waveguide.
